# EUROPÄISCHE PATENTSCHRIFT

(11) **EP 2 384 405 B1**
(45) Veröffentlichungstag und Bekanntmachung des Hinweises auf die Patenterteilung: **07.12.2016**
(21) Anmeldenummer: 10701836.8
(22) Anmeldetag: 15.01.2010
(51) Int. Cl.: F16K 31/06

(54) **MAGNETVENTIL**
SOLENOID VALVE
ÉLECTROVANNE

(30) Priorität: 31.01.2009 DE 102009006987
(43) Veröffentlichungstag der Anmeldung: 09.11.2011
(73) Patentinhaber: Deutsches Zentrum für Luft- und Raumfahrt e.V., 51147 Köln (DE)
(72) Erfinder: NEUHAUS, Dietmar, 40591 Düsseldorf (DE)
(74) Vertreter: dompatent von Kreisler Selting Werner - Partnerschaft von Patent- und Rechtsanwälten mbB
(86) Internationale Anmeldenummer: PCT/EP2010/050471
(87) Internationale Veröffentlichungsnummer: WO 2010/086241

(56) Entgegenhaltungen:
- EP-A2- 1 217 273
- DE-A1- 3 418 654
- DE-A1-102005 050 276
- DE-B3- 10 359 852
- DE-B3-102005 035 878
- DE-C1- 19 922 414
- US-A1- 2006 151 733

## Beschreibung

Die Erfindung betrifft ein magnetisch betätigbares Ventil nach dem Oberbegriff des Patentanspruchs 1.

Ein derartiges Ventil ist beschrieben in DE 199 22 414 C1 (DLR). Dieses Ventil weist einen von einer magnetisierbaren Wand umgebenen Innenraum auf, in dem ein kugelförmiges Verschlusselement bewegbar ist. Am Auslass des Innenraums befindet sich eine Ventilöffnung, die durch das Verschlusselement verschlossen werden kann. In der Wand des Innenraums wird ein Magnetfluss erzeugt, der durch eine Unstetigkeitsstelle unterbrochen ist. Hier tritt der Magnetfluss aus der Wand aus, so dass das Verschlusselement von dem Magnetfluss erfasst werden kann. Durch Erregung des Magneten wird das Verschlusselement von dem Ventilsitz zur Wand des Innenraums hin fortbewegt.

Dadurch wird das Ventil geöffnet. Ähnliche magnetisch betätigbare Ventile sind beschrieben in DE 10 2005 035 878 B3 (DLR) und DE 103 59 852 B3 (DLR). Bei den Ventilen wird das Verschlusselement allein durch die Druckdifferenz zwischen Ventileingang und Ventilausgang auf dem Ventilsitz gehalten. Das Verschlusselement ist magnetisierbar und wird durch Erzeugen des Magnetfeldes vom Ventilsitz fortbewegt. Zum Schließen des Ventils wird das durch das Ventil strömende Medium benutzt, dessen Strömungskräfte das Verschlusselement auf den Ventilsitz zurücktragen.

Ein weiteres magnetisch betätigbares Ventil ist aus US 2006/0151733 A bekannt. Ein Verschlusselement für ein magnetisch betätigbares Ventil muss magnetisierbar sein. Vorzugsweise wird dies durch Verwendung ferromagnetischer Metalle, wie Eisen, Kobalt oder Nickel, erreicht. Außerdem ist eine geringe Dichte des Verschlusselements zweckmäßig, um eine hohe Beschleunigung zu erreichen. Die träge Masse eines Verschlusselements behindert den Schließvorgang. Daher sollte die Masse des Verschlusselementes möglichst klein gehalten werden. Andererseits wird der Schließvorgang durch die auf die Oberfläche des Verschlusselements wirkenden Strömungs- und Druckkräfte bewirkt. Dieser Aspekt spricht für eine große Oberfläche des Verschlusselements.

Der Erfindung liegt die Aufgabe zugrunde, ein magnetisch betätigbares Ventil zu schaffen, das ein magnetisierbares Verschlusselement mit großen Abmessungen und geringer Dichte aufweist.

Das Ventil nach der vorliegenden Erfindung ist durch den Patentanspruch 1 definiert. Es ist dadurch gekennzeichnet, dass der Aktivatorkörper relativ zum Hohlkörper bewegbar ist.

Ein Magnetventil nach der Erfindung wird dadurch geöffnet, dass ein Magnetfeld auf das Verschlusselement wirkt. Die im Verschlusselement frei beweglichen magnetisierbaren Aktivatorkörper werden durch das Magnetfeld bewegt. Sie werden von der Wand des Innenraumes angezogen und nehmen dabei den gesamten Hohlkörper mit, wodurch das Verschlusselement von dem Ventilsitz fortbewegt wird.

Der Vorteil eines solchen Verschlusselementes besteht in der geringen Dichte, die beispielsweise kleiner ist als 1 g/cm³. Dadurch erhält das Verschlusselement eine geringe Masse, gleichwohl aber eine große Oberfläche. Infolge der geringen Masse wird das Verschlusselement durch das Magnetfeld stark beschleunigt. Die große Oberfläche bewirkt eine hohe Rückstellkraft durch die Strömung. Daher hat das Ventil sowohl beim Öffnen als auch beim Schließen kurze Reaktionszeiten. Die geringe Dichte bzw. die große Oberfläche des Verschlusselementes wird dadurch erreicht, dass das Verschlusselement ein Hohlkörper ist. Ein derartiger Hohlkörper wird bereits durch eine niedrige Strömungsgeschwindigkeit, die sich infolge einer geringen Druckdifferenz zwischen Ventileingang und Ventilausgang ergibt, auf den Ventilsitz zurückgetragen. Ein Vorteil der in dem Hohlkörper frei bewegbaren Aktivatorkörper besteht darin, dass der Hohlkörper eine sehr geringe Wandstärke haben kann. Die Wandstärke wird nicht durch die magnetischen Erfordernisse diktiert, so dass sie allein nach Festigkeitsaspekten gewählt werden kann. Im Rahmen der Erfindung kann die Wand des Hohlkörpers aus einem magnetisierbaren Werkstoff bestehen. In diesem Fall wird durch den Hohlkörper die Wirkung der Aktivatorkörper noch unterstützt.

Gemäß einer bevorzugten Ausgestaltung der Erfindung besteht die Wand des Hohlkörpers aus einem nicht-magnetisierbaren Werkstoff, wie insbesondere Kunststoff, Aluminium oder Titan. Die im Hohlkörper des Verschlusselementes beweglichen Aktivatorkörper sind vorteilhaft kleine magnetisierbare Kugeln, die leicht eine rollende Bewegung ausführen und durch ein Magnetfeld gut bewegt werden können. Die Kugeln werden durch das äußere Magnetfeld gegen die Wand des Hohlkörpers gezogen und drücken diesen von seinem Ventilsitz fort gegen die Seitenwand des Innenraums.

Besonders vorteilhaft ist der Hohlkörper des Verschlusselements eine Hohlkugel. Gemäß einer bevorzugten Ausführungsform der Erfindung ist vorgesehen, dass der Innenraum des Hohlkörpers Kugelform hat und dass der Durchmesser des Aktivatorkörpers maximal 50 % des Durchmessers des Hohlkörpers beträgt. Bei mehreren Aktivatorkörpern, die in demselben Hohlkörper enthalten sind, beträgt der Durchmesser eines Aktivatorkörpers maximal 20 % des Durchmessers des Hohlkörpers.

Im Folgenden werden unter Bezugnahme auf die Zeichnungen Ausführungsbeispiele der Erfindung näher erläutert.

Es zeigen:
- Fig. 1: einen Längsschnitt durch ein Magnetventil nach der Erfindung im Schließzustand des Verschlusselementes,
- Fig. 2: das Magnetventil von Figur 1 im Öffnungszustand und
- Fig. 3: ein Ausführungsbeispiel mit mehreren Verschlusselementen.

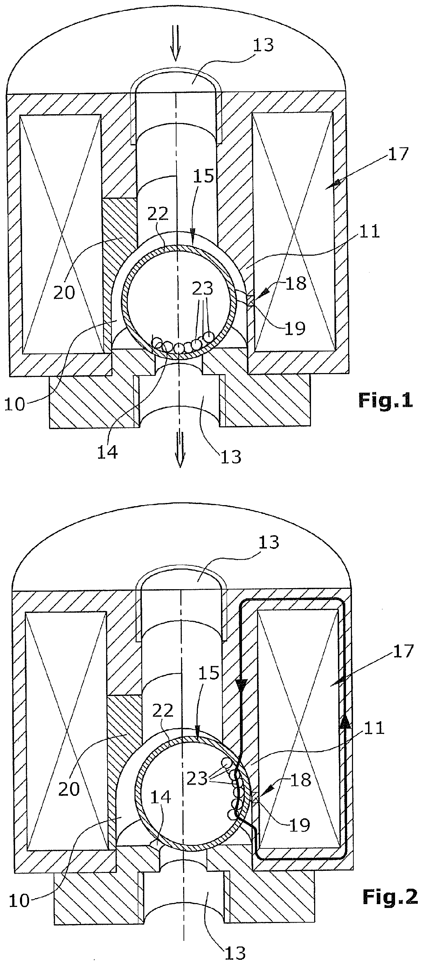

Das Ventil der Figuren 1 und 2 weist einen Innenraum 10 auf, der von einer Wand 11 umgeben ist, welche aus einem magnetisierbaren Material besteht.

Der Innenraum 10 weist eine axiale Zuströmöffnung 12 und am entgegengesetzten Ende einen Ventilsitz 14 auf, an den sich eine Abströmöffnung 13 anschließt. In dem Innenraum befindet sich das Verschlusselement 15, das als Kugel ausgebildet ist und in den Ventilsitz 14 hineinpasst und diesen verschließen kann. Das Verschlusselement 15 ist in dem Innenraum parallel zur Ebene des Ventilsitzes 14 bewegbar, sowie auch senkrecht zu dieser Ebene.

Die ringförmige Wand 11 enthält in einem ringförmigen Hohlraum eine Magnetanordnung 17 in Form einer Spule aus elektrisch leitendem Draht. Die Magnetanordnung ist in die magnetisierbare Wand 11 eingebettet und von dieser umschlossen.

Das magnetisierbare Material der Wand 11 enthält eine Unstetigkeitsstelle 18 in Form eines Spaltes, der mit einem nicht-magnetisierbaren Material 19 ausgefüllt ist. Die Unstetigkeitsstelle 18 befindet sich an einer Seite des Innenraums 10. An der gegenüberliegenden Seite enthält die Wand 11 im Bereich des Innenraums 10 einen Einsatz 20 aus nicht-magnetisierbarem Material. Dieser bewirkt, dass auf der Seite des Einsatzes 20 das Magnetfeld geschwächt ist und sich auf der entgegengesetzten Seite, an der sich die Unstetigkeitsstelle 18 befindet, konzentriert.

Erfindungsgemäß besteht das Verschlusselement 15 aus einem Hohlkörper 22 und mindestens einem Aktivatorkörper 23, der im Hohlraum des Hohlkörpers bewegbar ist. Die Aktivatorkörper 23 sind im vorliegenden Fall Kugeln, die aus magnetisierbarem Material bestehen und unabhängig voneinander bewegbar sind. Der Hohlkörper 22 kann aus nicht-magnetisierbarem Material bestehen, so dass er leichtgewichtig hergestellt werden kann. Seine Wandstärke wird durch die erforderliche Festigkeit und Formstabilität bestimmt.

Figur 2 zeigt das Ventil im Erregungszustand der Magnetanordnung 17, wobei der Verlauf des Magnetflusses 25 in der Wand 11 eingezeichnet ist. An der Unstetigkeitsstelle 18 tritt der Magnetfluss aus der Wand 11 aus und fließt weiter über die Aktivatorstelle, um danach wieder in die Wand einzutreten. Dabei zieht er die Aktivatorkörper 23 an die Wand 11 heran. Die Aktivatorkörper legen sich gegen die Wand des Hohlkörpers 22 und drücken diesen gegen die Wand 11.

Dadurch rollt das Verschlusselement 15 seitlich von dem Ventilsitz 14 und gibt diesen frei, so dass das gasförmige oder flüssige Medium von dem Ventileinlass zum Ventilauslass strömen kann.
In Figur 1 sind die Aktivatorkörper 23 infolge der Schwerkraft im unteren Bereich des Hohlkörpers 22 angeordnet. Bei Erregung der Magnetanordnung 17 gemäß
Figur 2 gelangen die Aktivatorkörper 23 durch den Magnetfluss 25 in den Seitenbereich des Hohlkörpers.

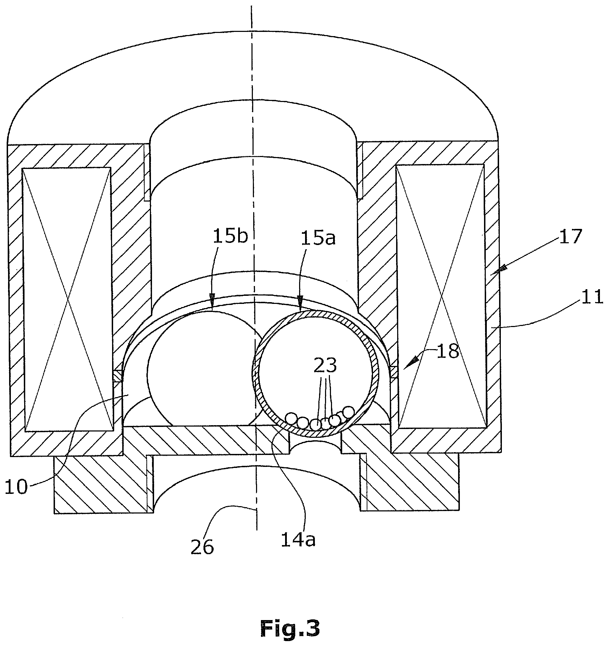

Figur 3 zeigt ein Ausführungsbeispiel mit mehreren Verschlusselementen 15a, 15b, die in einem gemeinsamen Innenraum 10 angeordnet sind, wobei jedem Verschlusselement ein eigener Ventilsitz zugeordnet ist. Die Ventilsitze, von denen hier nur der Ventilsitz 14a sichtbar ist, sind im Abstand von der Längsmittelachse 26, also außermittig zum Innenraum 10, angeordnet. Die Unstetigkeitsstelle 18 verläuft hier ringförmig um den Innenraum 10 herum, da wegen der außermittigen Anordnung der Verschlusselemente eine Schwächung des Magnetflusses an einer Seite des Innenraumes nicht erforderlich ist. Die Verschlusselemente 15a, 15b enthalten auch hier Aktivatorkörper 23. Bei dem Ausführungsbeispiel von Figur 3 sind insgesamt drei Verschlusselemente vorhanden, von denen in der Zeichnung nur zwei sichtbar sind.

## Patentansprüche

1. Magnetisch betätigbares Ventil mit einem durch mindestens eine aus magnetisierbarem Material bestehende Wand (11) begrenzten Innenraum (10), der einen Ventilsitz (14) aufweist, und mit einer Magnetanordnung (17), die einen Magnetkreis mit einem in der magnetisierbaren Wand (11) verlaufenden Magnetfluss (25) erzeugt, und mit mindestens einem in dem Innenraum (10) bewegbaren Verschlusselement (15), wobei die magnetisierbare Wand (11) mindestens eine das Magnetfeld deformierende Unstetigkeitsstelle (18) aufweist, an der das Magnetfeld in Richtung auf das Verschlusselement (15) aus der Wand (11) austritt,
wobei das Verschlusselement (15) ein Hohlkörper (22) ist, der in seinem Inneren mindestens einen bewegbaren magnetisierbaren Aktivatorkörper (23) enthält,
**dadurch gekennzeichnet,**
**dass** der Aktivatorkörper (23) relativ zum Hohlkörper (15) bewegbar ist.

2. Ventil nach Anspruch 1, **dadurch gekennzeichnet, dass** die Wand (11) des Hohlkörpers (22) aus einem nicht-magnetisierbaren Werkstoff besteht, wie Kunststoff, Aluminium oder Titan.

3. Ventil nach Anspruch 1 oder 2, **dadurch gekennzeichnet, dass** der mindestens ein Aktivatorkörper (23) eine Kugel ist.

4. Ventil nach einem der Ansprüche 1 - 3, **dadurch gekennzeichnet, dass** der Hohlkörper (22) eine Hohlkugel ist.

5. Ventil nach Anspruch 3 oder 4, **dadurch gekennzeichnet, dass** der Hohlraum des Hohlkörpers (22) kugelförmig ist und dass der Durchmesser des Aktivatorkörpers (23) maximal 50 % des Durchmessers des Hohlraums beträgt.

6. Ventil nach Anspruch 5, **dadurch gekennzeichnet, dass** mehrere unabhängig voneinander bewegbare Aktivatorkörper (23) vorgesehen sind und dass der Durchmesser eines Aktivatorkörpers (23) maximal 20 % des Durchmessers des Hohlraums beträgt.

7. Ventil nach einem der Ansprüche 1 - 6, **dadurch gekennzeichnet, dass** der Innenraum (10) mehrere Ventilsitze aufweist, wobei jedem Ventilsitz ein bewegbares Verschlusselement (15a, 15b) zugeordnet ist.

## Claims

1. A magnetically operable valve, comprising an inner chamber (10) which is delimited by at least one wall (11) of magnetizable material and includes a valve seat (14), said valve further comprising a magnetic assembly (17) generating a magnetic circuit with a magnetic flux (25) extending in the interior of said magnetizable wall (11), and further comprising at least one closure element (15) arranged for movement within the inner chamber (10), said magnetizable wall (11) having at least one discontinuity site (18) for deforming the magnetic field, the magnetic field at said discontinuity site (18) issuing from out of the wall (11) in the direction toward the closure element (15), and the closure element (15) being a hollow body (22) including in its interior at least one movable magnetizable activator body (23), **characterized in that** the activator body (23) is moveable relative to the hollow body (22).

2. The valve according to claim 1, **characterized in that** the wall (11) of the hollow body (22) is made of a non-magnetizable material such as plastic, aluminum or titanium.

3. The valve according to claim 1 or 2, **characterized in that** the at least one activator body (23) is a ball.

4. The valve according to any one of claims 1 - 3, **characterized in that** the hollow body (22) is a hollow ball.

5. The valve according to claim 3 or 4, **characterized in that** the hollow chamber of the hollow body (22) is spherical and that the diameter of the activator body (23) is maximally 50 % of the diameter of said hollow chamber.

6. The valve according to claim 5, **characterized in that** a plurality of mutually independently movable activator bodies (23) are provided and that the diameter of an activator body (23) is maximally 20 % of the diameter of said hollow chamber.

7. The valve according to any one of claims 1 - 6, **characterized in that** the inner chamber (10) comprises a plurality of valve seats, each valve seat having a movable closure element (15a, 15b) assigned to it.

## Revendications

1. Electrovanne avec un espace intérieur (10) qui est délimité par au moins une paroi (11) consistant en un matériau magnétisable et qui comprend un siège de vanne (14), et avec un agencement d'aimants (17) qui engendre un circuit magnétique avec un flux magnétique (25) passant par la paroi magnétisable (11), et avec au moins un élément obturateur (15) déplaçable dans l'espace intérieur (10), la paroi magnétisable (11) comprenant au moins un point de discontinuité (18) déformant le champ magnétique auquel le champ magnétique sort de la paroi (11) en direction de l'élément obturateur (15), l'élément obturateur (15) étant un corps creux (22) qui comprend en son sein au moins un corps d'activation (23) mobile magnétisable, **caractérisé en ce que** le corps d'activation (23) est mobile par rapport au corps creux (15).

2. Electrovanne selon la revendication 1, **caractérisé en ce que** la paroi (11) du corps creux (22) consiste en un matériau non magnétisable tel que de la matière plastique, de l'aluminium ou du titane.

3. Electrovanne selon la revendication 1 ou 2, **caractérisé en ce que** ledit au moins un corps d'activation (23) est une bille.

4. Electrovanne selon l'une des revendications 1 à 3, **caractérisé en ce que** le corps creux (22) est une bille creuse.

5. Electrovanne selon la revendication 3 ou 4, **caractérisé en ce que** l'espace creux du corps creux (22) a une forme de sphère et en que le diamètre du corps d'activation (23) est au maximum 50% du diamètre de l'espace creux.

6. Electrovanne selon la revendication 5, **caractérisé en ce que** sont prévus plusieurs corps d'activation (23) susceptibles d'être déplacés indépendamment les uns des autres et **en ce que** le diamètre d'un corps d'activation (23) est au maximum 20% du diamètre de l'espace creux.

7. Electrovanne selon l'une des revendications 1 à 6, **caractérisé en ce que** l'espace intérieur (10) comprend plusieurs sièges de vanne, à chaque siège de vanne étant associé un élément obturateur (15a, 15b) déplaçable.
